# EUROPEAN PATENT APPLICATION

(11) **EP 4 687 043 A1**
(43) Date of publication of application: **04.02.2026**
(21) Application number: 25190949.5
(22) Date of filing: 22.07.2025
(51) Int. Cl.: G06F 13/28

(54) **DEDICATED DIRECT MEMORY ACCESS ROUTER SYSTEM AND METHOD**

(30) Priority: 31.07.2024 US 202418789885
(71) Applicant: NXP USA, Inc., Austin, TX 78735 (US)
(72) Inventor: McDaid, David, 5656AG Eindhoven (NL); Marshall, Ray Charles, 5656AG Eindhoven (NL)
(74) Representative: Miles, John Richard

(57) **Abstract**

A direct memory access (DMA) router including interrupt inputs, action groups and a DMA router engine. Each interrupt input is configured to receive a corresponding interrupt signal. Each action group is associated with a corresponding interrupt input and is configured with at least one DMA action, in which each DMA action is configured to select a DMA controller and a corresponding channel. The DMA router is configured to initiate a transfer using a selected channel of a selected DMA controller for at least one DMA action listed in an action group associated with a corresponding interrupt input triggered by assertion of a corresponding interrupt signal. The DMA actions may indicate dependencies, such that the DMA router may initiate a second DMA action only after completion of a first DMA action within the same action group based upon the indicated dependency.

## Description

### BACKGROUND

### FIELD

The present disclosure relates in general to direct memory access (DMA), and more particularly to a dedicated DMA router that handles DMA requests to reduce processing core interruptions.

### DESCRIPTION OF THE RELATED ART

Many large system-on-chip (SoC) configurations include a significant number of direct memory access (DMA) controllers, each with multiple DMA channels. In many conventional configurations, if an interrupt requires triggering multiple DMA channels, then multiple interrupts may be triggered to one or more processing devices or cores, each being stopped to handle one or more tasks. The more the number of DMA channels that are required for handling the interrupt, the longer one or more processing cores are disturbed. Conventional configurations are not configured to initiate transfers using multiple DMA controllers from a single interrupt. At least one processing core must be interrupted multiple times to transfer operation from one DMA controller to another.

Because conventional DMA tasks are heavily interrupt driven, designers are almost invariably assigning the more complex tasks (e.g., move data, trigger communications, start encryption) to be handled by an application running on a processing core rather than offloading complex data transfer tasks to available DMA controllers to avoid excessive interruption. In addition, simpler background or housekeeping tasks and the like that do not require significant compute performance but that are performed often have several tasks to be handled by interrupting one or more processing cores on a regular basis.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a system-on-chip (SoC) including a direct memory access (DMA) router implemented according to one embodiment.
FIG. 2 is a simplified block diagram illustrating programming the miscellaneous control module (MSCM) of FIG. 1 for routing interrupts to processing cores and the DMA router of FIG. 1 according to one embodiment.
FIG. 3 is a simplified block diagram illustrating the DMA router of FIG. 1 interfacing one or more up to all of the DMA controllers of the SoC of FIG. 1 according to one embodiment.
FIG. 4 is a simplified block diagram illustrating interaction between the DMA router of FIG. 1 and selected channels of selected ones of the DMA controllers 1 - N according to one embodiment.
FIG. 5 is a simplified block diagram of the DMA router of FIG. 1 implemented according to one embodiment.
FIG. 6 is a simplified block diagram illustrated an embodiment of the action group AGx representing any of the action groups AG1 - AGM and AGY of FIG. 5 according to one embodiment.

### DETAILED DESCRIPTION

A dedicated hardware block is disclosed herein for routing direct memory access (DMA) triggers across an SoC rather than interrupting one or more processing cores on a regular basis. Although the dedicated hardware block may be configured to handle up to all DMA triggers on the SoC, the dedicated hardware block may at least be configured to handle simpler background or housekeeping tasks and the like that may not require significant compute performance but that may be performed often to avoid interrupting the processing cores on a regular basis. A system and method is disclosed herein for creating action groups for combining cross-SoC DMAs into set application groups. A system and method is disclosed herein for greatly offloading workloads from processing cores onto the DMAs, increasing overall system performance.

A DMA router is described including interrupt inputs, action groups and a DMA router engine. Each interrupt input is configured to receive a corresponding interrupt signal. Each action group is associated with a corresponding interrupt input and is configured with at least one DMA action, in which each DMA action is configured to select a DMA controller and a corresponding channel. The DMA router is configured to initiate a transfer using a selected channel of a selected DMA controller for at least one DMA action listed in an action group associated with a corresponding interrupt input triggered by assertion of a corresponding interrupt signal. The DMA actions may indicate dependencies, such that the DMA router may initiate a second DMA action only after completion of a first DMA action within the same action group based upon the indicated dependency.

A method of routing interrupts for initiating DMA transfers is described including routing interrupt signals of a System-on-Chip (SoC) to interrupt inputs of a DMA router, configuring each action group associated with a corresponding interrupt input of the DMA router with at least one DMA action, configuring each DMA action to select one DMA controller and a corresponding channel of the selected DMA controller, and initiating a transfer using a selected channel of a selected DMA controller for at least one DMA action listed in an action group associated with a corresponding interrupt input triggered by assertion of a corresponding interrupt signal. The method may include configuring one DMA action to depend upon one or more other DMA action within the same action group, such that the DMA router initiates the dependent DMA action only after completion of the one or more other DMA actions.

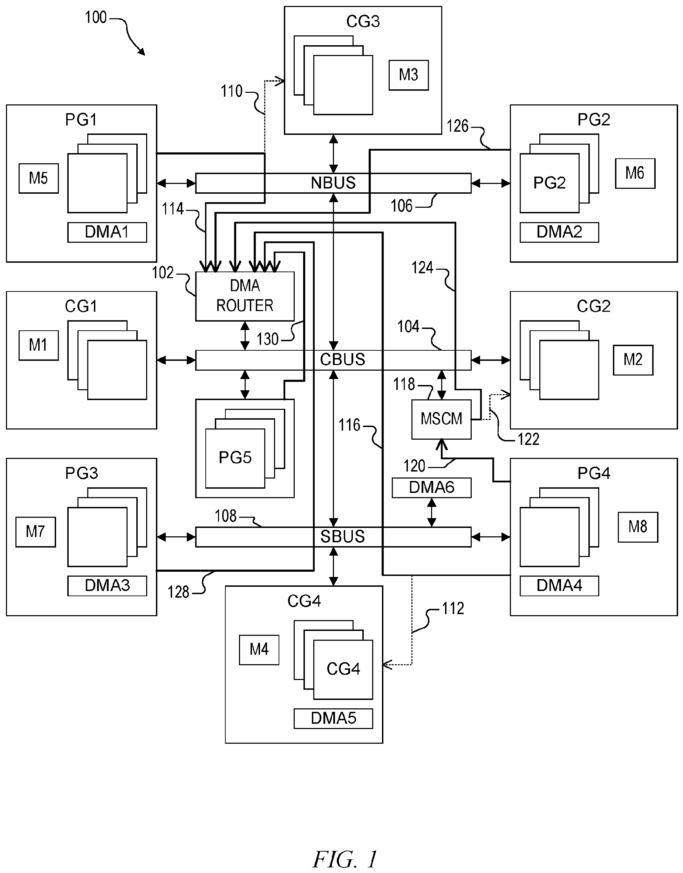

FIG. 1 is a simplified block diagram of a system-on-chip (SoC) 100 including a DMA router 102 implemented according to one embodiment. The SoC 100 includes an interconnect or bus system which may be formed by multiple bus structures including, for example, a central bus (CBUS) 104, a north bus (NBUS) 106, and a south bus (SBUS) 108. Although only 3 buses are shown, it is understood that any number may be included and coupled in any suitable manner. Each of the buses CBUS 104, NBUS 106, and SBUS 108 may be configured as a network-on-chip (NoC) or the like formed as a cross-bar or other interface for enabling access and communication between the devices of the SoC 100. The SoC 100 also includes multiple processing devices that may be grouped together into core groups or the like, such as a first core group CG1 and a second core group CG2 coupled to the CBUS 104, a third core group CG3 coupled to the NBUS 106, and a fourth core group CG4 coupled to the SBUS 108. Although four core groups CG1 - CG4 are shown, any number of core groups may be included. Each of the core groups CG1 - CG4 may include one or more processing devices in which each processing device may be configured as a processing core or central processing unit (CPU) or the like.

The SoC 100 further includes multiple peripheral devices that are shown grouped together into peripheral groups PG1, PG1, PG3, PG4, and PG5. Although five peripheral groups PG1 - PG5 are shown, any number of peripheral groups may be included. The peripheral groups PG1 and PG2 are shown coupled to the NBUS 106, the peripheral groups PG3 and PG4 are shown coupled to the SBUS 108, and the peripheral group PG5 is shown coupled to the CBUS 104. Each peripheral group may include one or more peripheral devices. Examples of peripheral devices include timers, universal asynchronous receiver-transmitters (UARTs), low voltage differential signaling (LVDS) devices, various communication peripherals, various controllers such as memory controllers and graphics controllers and the like, etc. Timers may include, for example, programmable interval timers (PITs), system timers (STMs), etc. Examples of communication peripherals include Ethernet controllers, controller area network (CAN) devices, serial peripheral interfaces (SPIs), local interconnect networks (LINs), FlexRay, etc.

Any one or more of the peripheral groups PG1 - PG5 may include a DMA controller. As shown, PG1 includes a first DMA controller DMA1, PG2 includes a second DMA controller DMA2, PG3 includes a third DMA controller DMA3, and PG4 includes a fourth DMA controller DMA4. The DMA controllers may be distributed in any suitable fashion and not necessarily included with the peripheral groups. As shown, a fifth DMA controller DMA5 is included with the core group CG4, and a stand-along DMA controller DMA6 is shown coupled to the SBUS 108. Although six peripheral DMA controllers DMA1 - DMA6 are shown, any number of DMA controllers may be included and distributed in any suitable fashion. Furthermore, although one or more of the DMA controllers DMA1 - DMA6 may be similar, they may also be different in terms of the included number of transfer control descriptor (TCD) channels, programming models, performance levels (e.g., AXI versus AHB master), etc.

Multiple memory devices may be distributed on the SoC 100. As shown, memory devices M1, M2, M3, and M4 are located with the core groups CG1, CG2, CG3, and CG4, respectively. Also, memory devices M5, M6, M7, and M8 are located with the peripheral groups PG1, PG2, PG3, and PG4, respectively. Although not show, additional memory devices may be included, such as centralized memory devices coupled to any one or more of the buses CBUS 104, NBUS 106, and SBUS 108. The memory devices M1 - M8, and any other memory devices that may be included, may include any combination of random access memory (RAM) type memory or readonly memory (ROM) type memory or the like. Also, the memory devices may include registers or the like. In addition, the memory devices may physically be located within any of the core devices or peripheral devices. Further, a number of external memory devices (not shown) may be coupled to and accessed as part of normal application operations (e.g., dynamic RAM (DRAM), Flash, secure digital (SD) cards, etc.).

In conventional configurations, many if not most interrupts generated by the peripheral devices are routed to a processing core within any one of the core groups CG1 - CG4. A dotted line 110, for example, illustrates an interrupt generated by a peripheral device within the peripheral group PG1 routed to a processing core within the core group CG3. Similarly, another dotted line 112 illustrates an interrupt generated by a peripheral device within the peripheral group PG4 routed to a processing core within the core group CG4. Many of the interrupts may be routed instead to the DMA router 102. As shown by line 114, for example, at least one interrupt that was routed from the peripheral group PG1 to the core group CG3 is instead routed from the peripheral group PG1 to the DMA router 102. Also, as shown by line 116, at least one interrupt that was routed from the peripheral group PG4 to the core group CG4 is instead routed from the peripheral group PG4 to the DMA router 102

In addition, a miscellaneous control module (MSCM) 118 may be included which may be programmed to route interrupts from one location to another. As shown, a line 120 represents one or more interrupts from corresponding peripheral devices of the peripheral group PG4 routed to the MSCM 118. In conventional configurations, the MSCM 118 was programmed to forward many of these interrupts to corresponding processing cores. As shown by a dotted line 122, for example, one or more interrupts received by the MSCM 118 were, in conventional configurations, routed to corresponding processing cores within the core group CG2. As shown by line 124, however, one or more of the interrupts received by the MSCM 118 may be routed to the DMA router 102 rather than a processing core.

In general, line 114 represents that one or more interrupts from corresponding peripheral devices in the peripheral group PG1 may be routed to the DMA router 102 rather than corresponding processing cores. A line 126 represents that one or more interrupts from corresponding peripheral devices in the peripheral group PG2 may be routed to the DMA router 102 rather than corresponding processing cores. A line 128 represents that one or more interrupts from corresponding peripheral devices in the peripheral group PG3 may be routed to the DMA router 102 rather than corresponding processing cores. The line 116 represents that one or more interrupts from corresponding peripheral devices in the peripheral group PG4 may be routed to the DMA router 102 rather than corresponding processing cores. A line 130 represents that one or more interrupts from corresponding peripheral devices in the peripheral group PG5 may be routed to the DMA router 102 rather than corresponding processing cores. The line 124 represents one or more interrupts from corresponding peripheral devices routed to the MSCM 118, if included, may instead be routed to the DMA router 102 rather than corresponding processing cores.

It is noted that many up to all interrupts in the SoC 100 may be routed to the DMA router 102. However, many, if not most interrupts generated by applications running one processing cores may still be routed to processing cores. For example, many of the more complex tasks handled by applications, such as move data, trigger communications, start encryption, etc., may still be routed directly to a processing core. Many housekeeping or background tasks including those not generated by an application, however, may instead be routed to the DMA router 102 to avoid excessive interruption of processing cores so that they may be more efficient handling processing tasks.

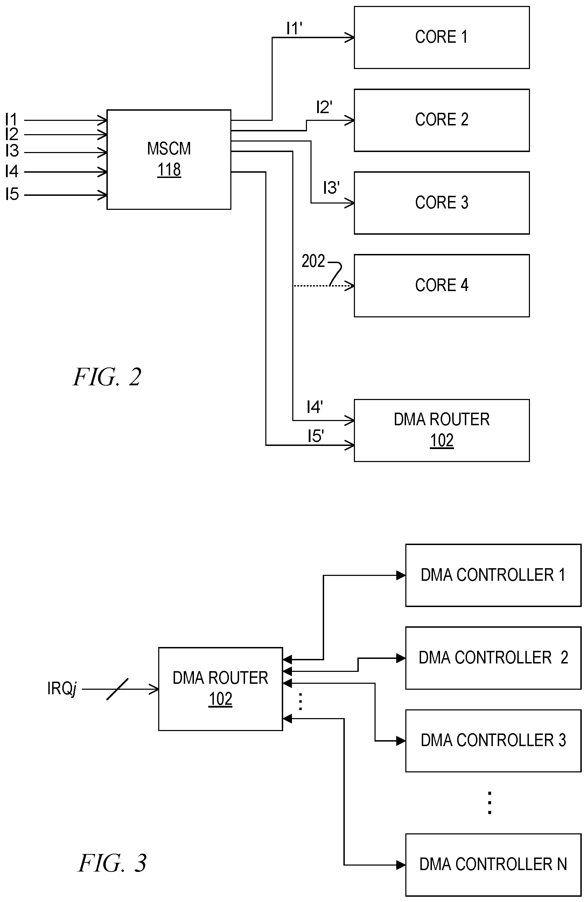

FIG. 2 is a simplified block diagram illustrating programming the MSCM 118 for routing interrupts to processing cores and the DMA router 102 according to one embodiment. Four processing cores are shown, CORE 1, CORE2, CORE 3, and CORE 4 for illustration only, in which it is understood that any number less than or more than 4 may be included. Many systems, for example, may have as many as 20 or more cores. As shown, the MSCM 118 is programmed to forward received interrupts I1, I2, I3, I4 and I5 as interrupts I1', I2', I3', I4' and I5', respectively. The interrupts I1', I2', and I3' are routed to processing cores CORE 1, CORE 2, and CORE 3, respectively, in which each of the processing cores CORE 1 - 3 are individual processing cores located in any of the core groups CG1 - CG4 of the SoC 100. A dotted line 202 represents that the MSCM 118 may originally be programmed to route the interrupt I4' to the processing core CORE 4. The MSCM 118, however, is programmed to route the interrupt I4' to the DMA router 102. It is noted that the MSCM 118 may be programmed to route I4' to either one or both the DMA router 102 and the CORE 4 depending upon the desired configuration. In addition, the MSCM 118 may receive the interrupt I5 and may be programmed to route I5 as the interrupt I5' to the DMA router 102.

FIG. 3 is a simplified block diagram illustrating the DMA router 102 interfacing one or more up to all of the DMA controllers of the SoC 100 according to one embodiment. As shown, the DMA router 102 receives one or more interrupts shown as IRQ*j* in which "*j*" is an index representing any one or more of multiple interrupts. The DMA router 102 interfaces a number "N" of DMA controllers, individually labeled DMA controller 1, DMA controller 2, DMA controller 3, ..., DMA controller N, in which N represents any number up to all of the DMA controllers of the SoC 100. In this manner, rather than interrupting any of the processing cores with the interrupts IRQ*j* for invoking DMA actions of the DMA controllers 1 - N, the interrupts IRQ*j* are instead routed to and handled by the DMA router 102. As described further herein, this includes the chaining of multiple DMA actions performed by multiple channels of multiple DMA controllers.

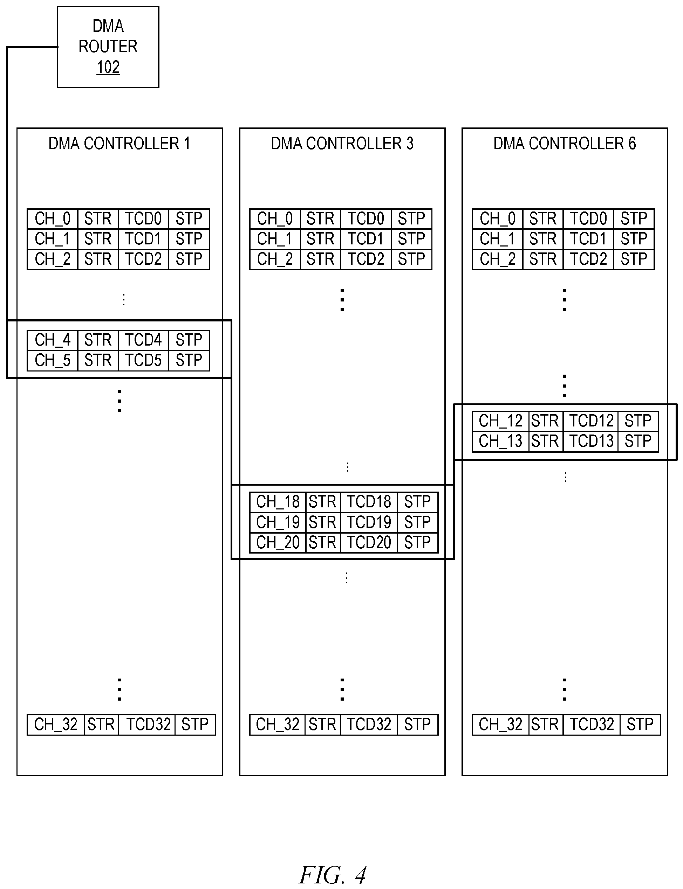

FIG. 4 is a simplified block diagram illustrating interaction between the DMA router 102 and selected channels of selected ones of the DMA controllers 1 -N according to one embodiment. In the illustrated embodiment, each of the DMA controllers 1 -N (including the illustrated DMA controller 1, DMA controller 3, and DMA controller 6) have multiple channels CH_0, CH_1, CH_2, ..., CH _32, each DMA channel including or otherwise associated with memory or registers or the like for storing a corresponding one of multiple transfer control descriptors (TCDs) TCD0, TCD1, TCD2, ..., TCD32. Although each DMA controller is shown with 33 channels, any number of channels more or less than 33 may be included. Each TCD may be programmed with information for conducting a transfer by the corresponding channel of data or information from one addressable location to another, such as a source address, a destination address, a transfer size, a transfer length, transfer attributes, etc. In one embodiment, each DMA channel may also include a start value (STR) and a stop (STP) value, in which each STR and STP value may include one or more bits. It is noted that the transfer of data or information can be used for any of many different functions, such as, for example, to program or reprogram register contents for configuration of peripherals.

The DMA router 102 is configured or otherwise programmed to access selected channels of selected DMA controllers. As shown, for example, the DMA router 102 accesses channels CH_4 and CH_5 of the DMA controller 1, channels CH_18, CH_19, and CH_20 of the DMA controller 3, and channels CH_12 and CH_13 of the DMA controller 6. The DMA router 102 triggers a DMA action (e.g., data transfer) of a DMA channel by setting the corresponding STR value, which invokes the corresponding DMA controller to initiate the transfer according to the corresponding TCD. The DMA router 102 monitors the corresponding STP value which is set by the corresponding DMA controller when the transfer is complete.

In one embodiment, the TCD of one or more of the triggered DMA channels may be pre-programmed to conduct predetermined transfers. Such programming may be performed, for example, by a selected one or more cores of the SoC 100 upon power-on, reset, or restart (POR). In addition or in the alternative, the DMA router 102 may be configured to program the TCD of the channel before starting the transfer. As described further herein, the DMA router 102 includes one or more programmed action groups triggered by a corresponding interrupt, in which each action group includes one or more DMA transfer actions. Each of the DMA transfer actions of a given action group may be performed simultaneously or in a programmed order as further described herein. In addition, each action group may access and trigger one or more channels of any one or more of the DMA controllers. In this manner, an action group may chain together multiple transfer actions that span multiple DMA controllers. As shown in FIG. 4, for example, an action group of the DMA router 102 initiated by a corresponding interrupt may trigger any one or more of the accessed channels (CH_4 and CH_5 of the DMA controller 1, channels CH_18, CH_19, and CH_20 of the DMA controller 3, and channels CH_12 and CH_13 of the DMA controller 6) at any time and in any order based on the action group as further described herein.

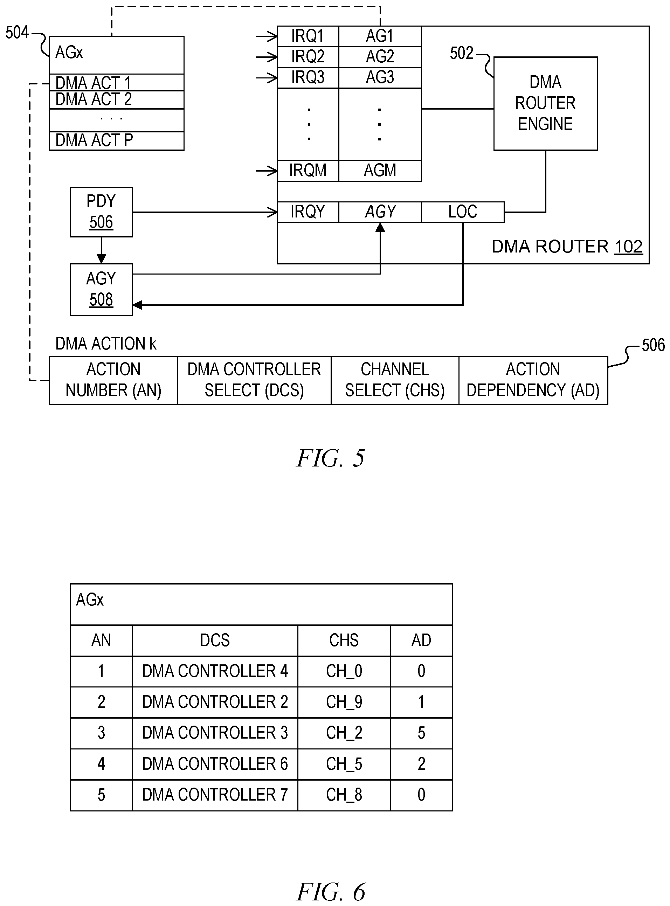

FIG. 5 is a simplified block diagram of the DMA router 102 implemented according to one embodiment. The DMA router 102 includes "M" interrupt inputs shown as IRQ1, IRQ2, IRQ3, ..., IRQM, in which M is any number greater than zero. Each of the interrupts IRQ1 - IRQM is linked to or otherwise associated with a corresponding one of M action groups shown as AG1, AG2, AG3, ..., AGM. Thus, for example, assertion of interrupt IRQ3 causes execution of corresponding action group AG3. A DMA router engine 502 initiates and manages performance of each action group triggered by assertion of the corresponding interrupts IRQ1 - IRQM. An example action group AGx 504 is shown which represents an embodiment of each of the action groups AG1 - AGM, in which "x" is any number from 1 to M. The action group AGx 504 includes a list of DMA actions shown as DMA ACT 1, DMA ACT 2...., DMA ACT P in which P is any positive integer.

An example DMA ACTION k 506 is shown which represents an embodiment of each of the DMA actions DMA ACT 1 - DMA ACT P, in which "k" is any number from 1 to P. In one embodiment, each action, as shown by the DMA ACTION k, includes an action number (AN) field, a DMA controller select (DCS) field, a channel select (CHS) field, and an action dependency (AD) field. In one embodiment, the AN field includes an alphanumeric value AN that is used to distinguish each DMA action from the others in each action group in which each DMA action may be assigned a different alphanumeric value. Alternatively, the DMA actions may simply be listed in numeric order and located at a different address or address offset in which the AN field is not explicitly provided but is otherwise implied by a separate location in the list. The DCS field is used to hold a corresponding DCS value used to identify or select one of the DMA controllers 1 - N of the SoC 100. The CHS field is used to hold a corresponding CHS value used to identify or select one of the DMA channels of the selected DMA controller. The AD field is used to hold an AD value used to denote one or more dependencies upon any other DMA actions in each DMA action group. For example, the AD value may simply be an AN value that denotes dependency upon the DMA action identified by the AN value stored in the AD field as further described herein.

The DMA router 102 may include one or more additional interrupt inputs illustrated by an interrupt IRQY. IRQY is shown associated with an action group AGY which may or may not be pre-programmed but which may be dynamically programmed during operation. As shown, for example, a peripheral device PDY 506 is configured to assert the interrupt IRQY. The peripheral device PDY 506 includes or otherwise accesses a memory location 508 for storing the action group AGY. The memory 508 may be programmed with the action group AGY by the peripheral device PDY 506 or by a processing core during operation, and then the peripheral device PDY 506 asserts IRQY. In response to the interrupt IRQY, the DMA router 502 accesses a corresponding location (LOC) value to access the memory 508, to retrieve and store the action group AGY into the corresponding local action group location, and then to execute the action group AGY. In this manner, the DMA router 102 may retrieve and execute one or more dynamic action groups during operation.

FIG. 6 is a simplified block diagram illustrated an embodiment of the action group AGx representing any of the action groups AG1 - AGM and AGY of FIG. 5 according to one embodiment. In this case the action group AGx includes five DMA actions numbered 1 - 5 as indicated in the corresponding AN fields. The corresponding DCS field of the five DMA actions identify DMA controllers 4, 2, 3, 6, and 7, respectively. The corresponding CHS field of the five DMA actions identify DMA channels CH_0, CH_9, CH_2, CH_5, and CH_8 of the DMA controllers 4, 2, 3, 6, and 7, respectively. The corresponding AD field of the five DMA actions include AD values 0, 1, 5, 2, and 0, respectively. An AD value of "0" means that the corresponding DMA action does not have any dependencies and may be started immediately or at any suitable time. In this manner, the DMA actions AN = 1 and AN = 5, or the DMA actions 1 and 5, may be started and performed simultaneously by the DMA router engine 502 in response to assertion of the corresponding interrupt. The AD value of 1 for the DMA action 2 means that the second listed DMA action 2 can only be started after completion of the first listed DMA action 1. The AD value of 5 for the DMA action 3 means that the third listed DMA action 3 can only be started after completion of the fifth listed DMA action 5. The AD value of 2 for the DMA action 4 means that the fourth listed DMA action 4 can only be started after completion of the second listed DMA action 2.

In this manner, DMA actions 1 and 5 may be started immediately or in any order such that they may be performed at the same time or at least such that performance overlaps each other, the DMA action 2 can only be started after completion of the DMA action 1, the DMA action 3 can only be started after the completion of the DMA action 5, and the DMA action 4 can only be started after completion of DMA action 2.

In an alternative embodiment (not shown), each AN value may be configured to identify multiple dependences. For example, an AD value of "12" may be used to denote that the corresponding DMA action may only be started after completion of both DMA actions 1 and 2. In other alternative embodiments (not shown), the AD value may be configured for more complex expressions to identify different dependency scenarios. For example, and AD value of "1&2" may be used to denote a logic "AND" operation meaning that the corresponding DMA action may only be started after completion of both DMA actions 1 and 2, an AD value of "1+2" may be used to denote a logic "OR" operation meaning that the corresponding DMA action may only be started after completion of either one of the DMA actions 1 or 2, and so on. In yet another embodiment (not shown), the AD value may be configured to store a timing value in which the corresponding DMA action may only be started after a time delay denoted by the timing value. It is appreciated that the AD value may be configured with any level of complexity to denote corresponding DMA action dependencies.

One or more action groups may be performed periodically based on a timer interrupt. As an example, an action group may include a first DMA action to move memory from a memory location within the memory M1 into a memory location within the memory M3, and a second DMA action to move memory from a memory location within the memory M6 into another memory location within the memory M3. These first two DMA actions may be performed at the same time since they are separate DMA actions. A third DMA action may trigger a UART message for initial debug information. The third DMA action may be dependent upon both the first and second DMA actions in which the DMA action is not started until after completion of both the first and second DMA actions. A fourth DMA action may move the data in memory M3 that was moved in the first two DMA actions to a communication device that transmits the data over a high-speed serial link, such as an external microcontroller unit (MCU) (not shown) for purposes of synchronization or the like. The fourth DMA action may depend upon the third DMA action. A fifth DMA action may trigger the transmission of a UART message for final debug information, in which the fifth DMA action may depend on the fourth DMA action.

One or more action groups may be performed non-periodically depending upon asynchronous interrupts, such as an interrupt triggered by reception of a specific CAN message. As an example, an action group may include a first DMA action to send a CAN frame directly to a decryption engine and to return the result. A second DMA action may be to read the result into a CAN XL memory to prepare transmission. A third DMA action may read a result into an Ethernet controller to prepare transmission. The second and third DMA actions may both depend upon the first DMA action, but once the first DMA action is completed, both of the first and second DMA actions be started at the same time or at least such that their operation overlaps each other. The two example action groups described above are only for purposes of illustration and not intended to limit the dedicated direct memory access router system and method described herein in any manner since many different types of action groups may be designed and implemented.

A direct memory access (DMA) router including interrupt inputs, action groups and a DMA router engine. Each interrupt input is configured to receive a corresponding interrupt signal. Each action group is associated with a corresponding interrupt input and is configured with at least one DMA action, in which each DMA action is configured to select a DMA controller and a corresponding channel. The DMA router is configured to initiate a transfer using a selected channel of a selected DMA controller for at least one DMA action listed in an action group associated with a corresponding interrupt input triggered by assertion of a corresponding interrupt signal. The DMA actions may indicate dependencies, such that the DMA router may initiate a second DMA action only after completion of a first DMA action within the same action group based upon the indicated dependency.

Aspects of the disclosure are defined in the accompanying claims. In first aspect, there is provided a direct memory access (DMA) router, comprising: a plurality of interrupt inputs, each configured to receive a corresponding one of a plurality of interrupt signals; a plurality of action groups, each associated with a corresponding one of the plurality of interrupt inputs and each configured with at least one DMA action; wherein each DMA action is configured to select one of a plurality of DMA controllers and to select a channel of the selected DMA controller; and a DMA router engine configured to initiate a transfer using a selected channel of a selected DMA controller for at least one DMA action listed in an action group associated with a corresponding one of the plurality of interrupt inputs triggered by assertion of a corresponding interrupt signal. In some embodiments, each DMA action comprises a DMA controller select value that selects one of the plurality of DMA controllers and a channel select value that selects a channel of the selected DMA controller. In some embodiments, a configured one of the plurality of action groups includes a first DMA action configured to select a channel of a first DMA controller and a second DMA action configured to select a channel of a second DMA controller; and wherein the DMA router engine, upon assertion of an interrupt signal provided to an interrupt input associated with the first one of the plurality of action groups, initiates a first transfer using the selected channel of the first DMA controller and initiates a second transfer using the selected channel of the second DMA controller.

In some embodiments, the first and second transfers are allowed to overlap each other in time. In some embodiments, the second DMA action is configured to indicate a dependence upon the first DMA action, and wherein the DMA router engine is configured to initiate the second transfer only after completion of the first transfer. In some embodiments, at least one of the plurality of action groups comprises a plurality of DMA actions each configured to select a channel of a corresponding selected DMA controller; and wherein the DMA router engine, upon assertion of an interrupt signal provided to an interrupt input associated with the at least one of the plurality of action groups, initiates a plurality of transfers each using a selected channel of the selected DMA controller. In some embodiments, at least two of the plurality of transfers are allowed to overlap in time.

In some embodiments, each DMA action comprises an action dependency value that may be used to indicate a dependence upon at least one other DMA action within the same action group, and wherein the DMA router engine is configured to initiate at least one of the plurality of transfers only after completion of at least one other one of the plurality of transfers based upon indicated dependencies. In some embodiments, the DMA router further comprises a location value associated with a programmable interrupt, wherein the DMA router engine is further configured, in response to assertion of an interrupt signal provided to the programmable interrupt, to access a remote action group using the location value and to initiate transfer for each DMA action listed in the remote action group.

In a second aspect, there is provided a system-on-chip (SoC), comprising: a direct memory access (DMA) router, comprising: a plurality of interrupt inputs, each configured to receive a corresponding one of a plurality of interrupt signals; a plurality of action groups, each associated with a corresponding one of the plurality of interrupt inputs and each configured with at least one DMA action; wherein each DMA action is configured to select one of a plurality of DMA controllers and a channel of the selected DMA controller; and a DMA router engine configured to initiate a transfer using a selected channel of a selected DMA controller for at least one DMA action listed in an action group associated with a corresponding one of the plurality of interrupt inputs triggered by assertion of a corresponding interrupt signal; and a programmable control module that is configured to route an interrupt signal to one of the plurality of interrupt inputs of the DMA router.

In a third aspect, there is provided a method of routing interrupts for initiating direct memory access (DMA) transfers of a system-on-chip (SoC), comprising: configuring at least one action group of a DMA router of the SoC associated with a corresponding one of at least one interrupt input of the DMA router with at least one DMA action; and configuring each DMA action to select one of a plurality of DMA controllers and to select a channel of the selected DMA controller for initiating a transfer using the selected channel of the selected DMA controller for each DMA action listed in an action group associated with a corresponding interrupt input of the DMA router triggered by assertion of a corresponding interrupt signal.

In some embodiments, the configuring each DMA action comprises programming a DMA controller select value for selecting one of a plurality of DMA controllers and programming a channel select value for selecting a channel of the selected DMA controller. In some embodiments, the method further comprises configuring an action group with a first DMA action configured to select a channel of a first DMA controller and a second DMA action configured to select a channel of a second DMA controller; and upon assertion of an interrupt signal provided to an interrupt input associated with the action group, initiating a first transfer using the selected channel of the first DMA controller and initiating a second transfer using the selected channel of the second DMA controller. In some embodiments, the method further comprises allowing the first and second transfers to overlap in time. In some embodiments, the method further comprises configuring the second DMA action to depend upon the second DMA action; and upon assertion of the interrupt signal, initiating the second transfer only after completion of the first transfer.

In some embodiments, the method further comprises: configuring at least one action group with a plurality of DMA actions that are each configured to select a DMA controller and a corresponding channel of the selected DMA controller; and upon assertion of an interrupt signal provided to an interrupt input associated with the at least one action group, initiating a plurality of transfers each using a selected channel of a selected DMA controller. In some embodiments, the method further comprises: allowing at least two of the plurality of transfers to overlap in time.

In some embodiments, the method further comprises: configuring at least one DMA action of an action group to indicate a dependence upon at least one other DMA action of the action group; and initiating at least one of the plurality of transfers only after completion of at least one other one of the plurality of transfers based upon indicated dependencies. In some embodiments, the method further comprises: programming the DMA router with a location value associated with a programmable interrupt; and in response to assertion of an interrupt signal provided to the programmable interrupt, accessing a remote action group using the location value and initiating transfer for at least one DMA action listed in the remote action group. In some embodiments, the method further comprises: programming a programmable control module to route an interrupt signal to an interrupt input of the DMA router.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A direct memory access (DMA) router, comprising:
a plurality of interrupt inputs, each configured to receive a corresponding one of a plurality of interrupt signals;
a plurality of action groups, each associated with a corresponding one of the plurality of interrupt inputs and each configured with at least one DMA action;
wherein each DMA action is configured to select one of a plurality of DMA controllers and to select a channel of the selected DMA controller; and
a DMA router engine configured to initiate a transfer using a selected channel of a selected DMA controller for at least one DMA action listed in an action group associated with a corresponding one of the plurality of interrupt inputs triggered by assertion of a corresponding interrupt signal.

2. The DMA router of claim 1, wherein each DMA action comprises a DMA controller select value that selects one of the plurality of DMA controllers and a channel select value that selects a channel of the selected DMA controller.

3. The DMA router of claim 1 or 2,
wherein a configured one of the plurality of action groups includes a first DMA action configured to select a channel of a first DMA controller and a second DMA action configured to select a channel of a second DMA controller; and
wherein the DMA router engine, upon assertion of an interrupt signal provided to an interrupt input associated with the first one of the plurality of action groups, initiates a first transfer using the selected channel of the first DMA controller and initiates a second transfer using the selected channel of the second DMA controller.

4. The DMA router of claim 3, wherein the first and second transfers are allowed to overlap each other in time.

5. The DMA router of claim 3 or 4, wherein the second DMA action is configured to indicate a dependence upon the first DMA action, and wherein the DMA router engine is configured to initiate the second transfer only after completion of the first transfer.

6. The DMA router of any preceding claim,
wherein at least one of the plurality of action groups comprises a plurality of DMA actions each configured to select a channel of a corresponding selected DMA controller; and
wherein the DMA router engine, upon assertion of an interrupt signal provided to an interrupt input associated with the at least one of the plurality of action groups, initiates a plurality of transfers each using a selected channel of the selected DMA controller.

7. The DMA router of claim 6, wherein at least two of the plurality of transfers are allowed to overlap in time.

8. The DMA router of claim 6 or 7, wherein each DMA action comprises an action dependency value that may be used to indicate a dependence upon at least one other DMA action within the same action group, and wherein the DMA router engine is configured to initiate at least one of the plurality of transfers only after completion of at least one other one of the plurality of transfers based upon indicated dependencies.

9. The DMA router of any preceding claim, further comprising a location value associated with a programmable interrupt, wherein the DMA router engine is further configured, in response to assertion of an interrupt signal provided to the programmable interrupt, to access a remote action group using the location value and to initiate transfer for each DMA action listed in the remote action group.

10. A system-on-chip (SoC), comprising:
the direct memory access (DMA) router of any preceding claim;
a programmable control module that is configured to route an interrupt signal to one of the plurality of interrupt inputs of the DMA router.

11. A method of routing interrupts for initiating direct memory access (DMA) transfers of a system-on-chip (SoC), comprising:
configuring at least one action group of a DMA router of the SoC associated with a corresponding one of at least one interrupt input of the DMA router with at least one DMA action; and
configuring each DMA action to select one of a plurality of DMA controllers and to select a channel of the selected DMA controller for initiating a transfer using the selected channel of the selected DMA controller for each DMA action listed in an action group associated with a corresponding interrupt input of the DMA router triggered by assertion of a corresponding interrupt signal.

12. The method of claim 11, wherein the configuring each DMA action comprises programming a DMA controller select value for selecting one of a plurality of DMA controllers and programming a channel select value for selecting a channel of the selected DMA controller.

13. The method of claim 11 or 12, further comprising:
configuring an action group with a first DMA action configured to select a channel of a first DMA controller and a second DMA action configured to select a channel of a second DMA controller; and
upon assertion of an interrupt signal provided to an interrupt input associated with the action group, initiating a first transfer using the selected channel of the first DMA controller and initiating a second transfer using the selected channel of the second DMA controller.

14. The method of claim 13, further comprising allowing the first and second transfers to overlap in time.

15. The method of claim 13 or 14, further comprising:
configuring the second DMA action to depend upon the second DMA action; and
upon assertion of the interrupt signal, initiating the second transfer only after completion of the first transfer.
